# EUROPÄISCHE PATENTSCHRIFT

(11) **EP 3 216 554 B1**
(45) Veröffentlichungstag und Bekanntmachung des Hinweises auf die Patenterteilung: **06.05.2020**
(21) Anmeldenummer: 16159291.0
(22) Anmeldetag: 09.03.2016
(51) Int. Cl.: B23K 103/08, B23K 103/16, B23P 6/00, B32B 15/01, C22C 19/05, C22C 19/07, C22F 1/10, B23K 35/30, B23K 35/02, B23K 101/00

(54) **BAUTEIL MIT VERSCHLEISSGESCHÜTZTEN ÖFFNUNGEN UND VERTIEFUNGEN SOWIE VERFAHREN ZUR HERSTELLUNG DERSELBEN**
COMPONENT WITH WEAR- RESISTANT OPENINGS AND DEPRESSIONS AND METHOD FOR PRODUCING THE SAME
COMPOSANT COMPRENANT DES OUVERTURES ET DES EVIDEMENTS PROTEGES CONTRE L'USURE ET SON PROCEDE DE FABRICATION

(43) Veröffentlichungstag der Anmeldung: 13.09.2017
(73) Patentinhaber: MTU Aero Engines AG, 80995 München (DE)
(72) Erfinder: Bär, Sebastian, 80686 München (DE)

(56) Entgegenhaltungen:
- EP-A1- 1 803 521
- US-A1- 2002 119 338
- US-A1- 2008 187 777
- US-A1- 2015 377 037

## Beschreibung

### HINTERGRUND DER ERFINDUNG

### GEBIET DER ERFINDUNG

Die vorliegende Erfindung betrifft ein Bauteil einer Strömungsmaschine mit verschleißgeschützten Öffnungen, Bohrungen oder Vertiefungen sowie ein Verfahren zur Herstellung desselben.

### STAND DER TECHNIK

In Strömungsmaschinen sowie stationären Gasturbinen oder Flugtriebwerken herrschen im Bereich des Strömungskanals zum Teil Betriebsbedingungen, bei denen aggressive Medien bei sehr hohen Temperaturen mit hohen Strömungsgeschwindigkeiten bewegt werden, sodass die Bauteile unter anderem auch starken Vibrationen ausgesetzt sind. Entsprechend müssen Bauteile im Bereich des Strömungskanals unter den genannten Umständen vielfältigen Anforderungen genügen und insbesondere eine hohe Verschleißbeständigkeit gegenüber Fretting aufweisen. Dies gilt insbesondere im Bereich von Öffnungen, Bohrungen oder Vertiefungen, wo sich aufgrund der Strömungsbedingungen ein besonders starker Verschleiß bemerkbar machen kann.

Entsprechend ist es erforderlich derartige Bereiche besonders zu schützen oder nach einer bestimmten Betriebsdauer aufzuarbeiten.

Zum Schutz von Bauteilen in Strömungsmaschinen, wie beispielsweise von Schaufelblättern, ist es bereits bekannt Lotmaterialien aufzubringen, wie dies beispielsweise in der EP 1 685 923 A1, US 8 342 386 B2, EP 1219 375 A2, US 7 343 676 B2, WO 2011/015192 A1, EP 0 673 292 B1, EP 2 774 710 A1 oder der JP-2005 305 492 A beschrieben ist. Des Weiteren offenbart Dokument US20020119338 eine Turbinenmotorkomponente umfassend ein Substrat und eine Verschleißschutzbeschichtung. Die Verschleißschutzbeschichtung beinhaltet verschleißbeständige Partikel in einer Matrix, wobei die verschleißbeständigen Partikel aus Chromkarbiden oder einer Kobaltlegierung gebildet sind. Allerdings bestehen für die Herstellung von verschleißgeschützten Öffnungen oder Vertiefungen bzw. die Reparatur derartiger Formbauteile mit verschleißbeständigen Materialien besondere Anforderungen, da die zu bearbeitenden Flächen nicht so einfach zugänglich sind, wie beispielsweise die Oberflächen von Turbinenschaufeln und dergleichen.

### OFFENBARUNG DER ERFINDUNG

### AUFGABE DER ERFINDUNG

Es ist deshalb Aufgabe der vorliegenden Erfindung ein Verfahren zur Herstellung und/oder Reparatur von verschleißgeschützten Öffnungen, Bohrungen, Vertiefungen oder dergleichen von Bauteilen einer Strömungsmaschine und insbesondere von Bauteilen einer Strömungskanalbegrenzung sowie entsprechende Bauteile bereitzustellen, die sowohl den hohen Anforderungen an den Verschleißschutz selbst als auch an die Beständigkeit sowie Haftung des aufgebrachten Verschleißschutzes sowie den Erfordernissen hinsichtlich eines einfachen und effektiven Aufbringens genügen.

### TECHNISCHE LÖSUNG

Diese Aufgabe wird gelöst durch ein Verfahren mit den Merkmalen des Anspruchs 1 sowie ein Bauteil mit den Merkmalen des Anspruchs 12. Vorteilhafte Ausgestaltungen sind Gegenstand der abhängigen Ansprüche.

Die Erfindung schlägt vor, zur Herstellung oder Reparatur von verschleißbelasteten Bohrungen oder Öffnungen an Bauteilen einer Strömungsmaschine, insbesondere von Elementen einer Strömungskanalbegrenzung, ein mindestens zweilagiges, dreidimensionales Formteil zu erzeugen, welches in die Bohrung oder Öffnung eingesetzt werden kann und mittels einer Wärmebehandlung mit einer die Bohrung oder Öffnung umgebenden Wand verbunden werden kann. Entsprechend kann die Erfindung bei Öffnungen, Bohrungen oder Vertiefungen eingesetzt werden, die mit einer umlaufenden Wand einen Raum begrenzen und umgeben, wobei eine Normale auf der Wand einen Vektoranteil aufweist, der quer zu einer zentralen Achse der Öffnung oder Vertiefung oder einem gegenüberliegenden Wandbereich ausgerichtet ist.

Gemäß der Erfindung kann das mindestens zweilagige Formteil eine Lage aus einem Ni - Lot aufweisen, wobei eine zweite Lage aus einem Gemisch aus einem Ni - Lot und Hartstoffpartikeln gebildet ist, wobei die Hartstoffpartikel aus Hartlegierungen auf Basis von Kobalt und/oder Nickel, insbesondere CoCrMo - Legierungen, wie T800, gebildet sind. Das Formteil kann so ausgebildet sein, dass zumindest teilweise eine äußere Form des Formteils der inneren Form der zu reparierenden Bohrung oder Öffnung entspricht, also die Oberfläche des Formteils zumindest teilweise der Form der die Öffnung oder Vertiefung umgebenden Wand entspricht, sodass es beim Einsetzen des Formteils in die Vertiefung oder Öffnung zu einer flächigen Anlage des Formteils an der Wandbegrenzung der Öffnung oder Vertiefung kommt, sodass durch eine entsprechende Wärmebehandlung eine gute Lotverbindung zwischen dem Formteil und der Wandbegrenzung der Öffnung oder Vertiefung zustande kommt.

Durch die mindestens zweilagige Ausbildung des Formteils mit einer äußeren Ni - Lot - Lage, die beim Einsetzen in die Vertiefung oder Öffnung in Anlage an die die Öffnung oder Vertiefung begrenzende Wand gelangt, kann eine gute Anbindung des Formteils an die Wand der Öffnung oder Vertiefung erreicht werden. Die mindestens zweite Lage aus einem Gemisch an Ni - Lot und Hartstoffpartikeln (Gemisch - Lage) die nach dem Einsetzen des Formteils in die Öffnung oder Vertiefung die äußere Begrenzung der Öffnung oder Vertiefung darstellt und somit in Kontakt mit den in der Strömungsanlage geführten Medien und/oder Oberflächen benachbarter Bauteile gelangt, kann ein guter Verschleißschutz bereitgestellt werden. Dies gilt insbesondere da die Gemisch - Lage einen hohen Anteil an Hartstoffpartikeln in Form von Hartlegierungen aufweisen kann, da durch die reine Ni - Lot - Lage, die zur Anbindung an den Grundwerkstoff des zu schützenden Bauteils dient, eine besonders gute Anlage und Haftung sowie Verbindung mit dem Bauteil ermöglicht wird und somit die Gemisch - Lage nicht auf diese Anforderung abgestimmt werden muss.

Das Formteil kann so hergestellt werden, dass zunächst ein zweilagiges Lotband bzw. eine Lotplatte mit einer Ni - Lot - Lage und einer Gemisch - Lage aus einem Gemisch aus Ni - Lot und Hartstoffpartikeln erzeugt wird und anschließend das entsprechende zweilagige Lotband durch Tiefziehen oder Pressen in eine Matrize in die entsprechende Form eines Formteils gebracht wird.

Die Bohrung, Vertiefung oder Öffnung, die durch die Aufbringung des Formteils vor Verschleiß geschützt werden soll, kann durch Materialbearbeitung und insbesondere Materialabtragen für das Einsetzen des Formteils vorbereitet werden, wobei damit nicht nur die Form der Öffnung oder Vertiefung auf die äußere Form des Formteils abgestimmt werden kann, sondern auch unerwünschte Oxidschichten oder sonstige Fremdstoffe entfernt werden können, um ein Anhaften des Formteils an dem Grundwerkstoff des zu schützenden Bauteils zu gewährleisten. Das zu schützende Bauteil kann insbesondere durch eine Nickel - oder Kobalt - Basislegierung gebildet sein, bei denen also Nickel oder Kobalt den Hauptlegierungsbestandteil bilden. Insbesondere kann es sich um Superlegierungen mit diesen Hauptlegierungsbestandteilen handeln, die Einsatztemperaturen über 55 %, insbesondere 80 % oder 90 % ihrer Schmelztemperatur erreichen und beispielsweise einkristallin ausgebildet sein können.

Die Gemisch - Lage des Formteils mit einer Mischung aus Ni - Lot und Hartstoffpartikeln kann so aufgebaut sein, dass die Lage 20 bis 60 Gew.%, vorzugsweise 30 bis 50 Gew.%, höchst vorzugsweise 35 bis 45 Gew.%, insbesondere 40 Gew.% Hartstoffpartikel aufweist.

Die Lage aus Ni - Lot weist vorzugsweise keine Hartstoffpartikel auf, um eine möglichst gute Anbindung an den Grundwerkstoff des zu schützenden Bauteils zu gewährleisten.

Das Ni - Lot kann eine Legierung sein, die Chrom, Silizium und/oder Bor sowie als Hauptbestandteil Nickel und unvermeidbare Verunreinigungen aufweist.

Bei der Hartlegierung für die Hartstoffpartikel kann es sich eine Co - Mo - Cr - Si - Legierung handeln, die insbesondere 16,5 bis 18,5 Gew.% Chrom, 27 bis 30 Gew.% Molybdän, 3 bis 3,8 Gew.% Silizium, bis zu 3 Gew.% Nickel und Eisen, jeweils bis zu 0,1 Gew.% Schwefel, Stickstoff, Sauerstoff und Kohlenstoff umfasst sowie als Rest Kobalt und unvermeidbare Verunreinigungen aufweisen kann.

Die Wärmebehandlung zur Verbindung des Formteils mit dem zu schützenden Bauteil kann so erfolgen, dass das gesamte Bauteil mit dem eingesetzten Formteil der Wärmebehandlung ausgesetzt wird oder nur ein Teilbereich des Bauteils, in dem das Formteil eingesetzt ist. Die Wärmebehandlung kann unter Vakuumbedingungen oder unter Schutzgas durchgeführt werden, um zu vermeiden, dass während der Wärmebehandlung Reaktionen des Bauteils mit der Umgebungsatmosphäre erfolgen.

Der Wärmebehandlung kann ein Trocknungsprozess vorgeschaltet werden, bei dem das aufgebrachte Lot mit den Hartstoffpartikeln bei 50° bis 80° Celsius vorzugsweise 60° bis 70° Celsius luftgetrocknet wird, um beispielsweise Bindemittel, die das Lotband bzw. das Formteil enthalten kann, auszutreiben.

Die Wärmebehandlung zur Durchführung des Lotprozesses kann im Temperaturbereich von 1150°C bis 1200°C, insbesondere von 1170°C bis 1180°C für 10 bis 25 Minuten, insbesondere 15 bis 20 Minuten durchgeführt werden.

Der Aufheizvorgang zum Aufheizen auf die Löttemperatur kann ebenso wie die Wärmebehandlung bei der Löttemperatur bereits unter Vakuumbedingungen stattfinden, wobei der Druck im Bereich von ≤ 10⁻³ mbar, vorzugsweise ≤ 10⁻⁴ mbar liegen kann.

Der Aufheizvorgang auf die Löttemperatur kann kontinuierlich mit konstanter oder variierender Aufheizgeschwindigkeit durchgeführt werden, wobei die Aufheizgeschwindigkeit im Bereich von 5°C pro Minute bis 30°C pro Minute und insbesondere im Bereich von 10°C pro Minute bis 20°C pro Minute gewählt werden kann.

Alternativ oder zusätzlich kann das Bauteil mit dem eingesetzten Formteil während des Aufheizvorgangs bei einer oder mehreren Zwischentemperaturen auch für eine bestimmte Zeit gehalten (ausgelagert) werden, um dem Formteil genügend Zeit beispielsweise für das Ausgasen von Bindemittel zu geben. So können Zwischenauslagerungen im Temperaturbereich von 400°C bis 1100 C, beispielsweise bei 450°C, 600°C und/oder 1050°C für eine Zeitdauer von 5 bis 40 Minuten, insbesondere 10 bis 30 Minuten durchgeführt werden.

Ein entsprechend hergestelltes Bauteil kann beispielsweise ein Turbinenzwischengehäuse sein, welches den Verbindungskanal zwischen der Hochdruckturbine und der Niederdruckturbine einer Strömungsmaschine darstellt und besonders hohen Belastungen ausgesetzt ist.

### KURZBESCHREIBUNG DER FIGUREN

Die beigefügten Zeichnungen zeigen in rein schematischer Weise in
- Figur 1: eine Schnittansicht durch ein zweilagiges Lotband, wie es bei der vorliegenden Erfindung Verwendung findet,
- Figur 2: eine Schnittansicht einer Matrizen - Stempel - Anordnung zur Herstellung eines kegelförmigen Formteils gemäß der vorliegenden Erfindung,
- Figur 3: eine Schnittansicht eines erfindungsgemäßen, kegelförmigen Formteils und in
- Figur 4: eine Schnittansicht durch einen Teil eines Bauteils, bei dem das Formteil aus Figur 3 eingebaut worden ist.

### AUSFÜHRUNGSBEISPIELE

Weitere Vorteile, Kennzeichen und Merkmale der vorliegenden Erfindung werden bei der nachfolgenden detaillierten Beschreibung von Ausführungsbeispielen deutlich. Allerdings ist die Erfindung nicht auf diese Ausführungsbeispiele beschränkt.

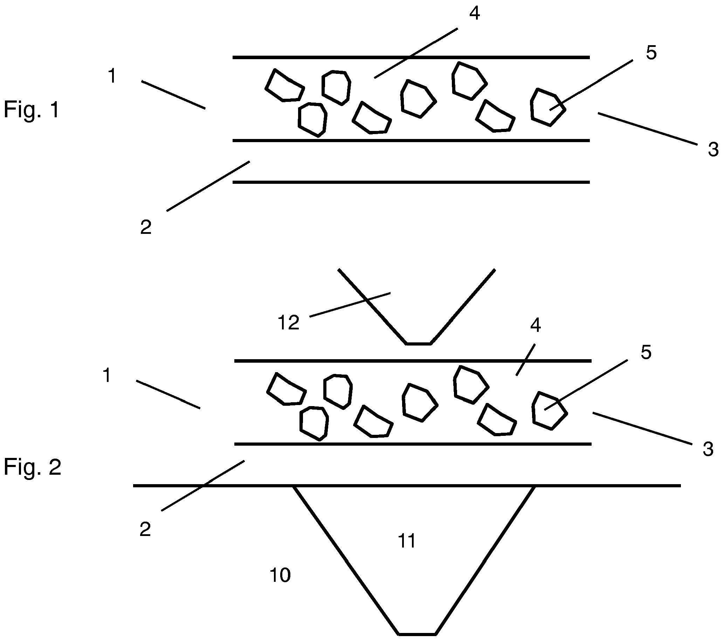

Die Figur 1 zeigt ein sogenanntes Lotband 1, welches aus zwei Lagen aufgebaut ist, nämlich einer Lage 2 aus Ni - Lot und einer Lage 3 aus einer Mischung aus Ni - Lot 4 und Hartstoffpartikeln 5.

Die Lage 3 aus Nickel - Lot 4 und Hartstoffpartikel 5 ist bei dem gezeigten Ausführungsbeispiel so zusammengesetzt, dass die Lage 3 ca. 60 Gew.% Ni - Lot 4 und 40 Gew.% Hartstoffpartikel 5 in Form einer Hartlegierung auf Basis von Kobalt aufweist.

Das Nickel - Lot wie es in der reinen Nickel - Lot - Lage 2 und in der Lage 3 mit einem Gemisch aus Nickel - Lot 4 und Hartstoffpartikeln 5 Verwendung findet, kann aus 19 Gew.% Chrom, 10 Gew.% Silizium und Rest Nickel sowie unvermeidbaren Verunreinigungen zusammengesetzt sein. Bei der Hartstofflegierung kann es sich um eine Kobaltbasislegierung handeln, die 16,5 - 18,5 Gew.% Chrom, 27 - 30 Gew.% Molybdän, 3 - 3,8 Gew.% Silizium, bis zu 3 Gew.% Nickel und Eisen, 0,08 Gew.% Kohlenstoff, 0,07 Gew.% Stickstoff, 0,05 Gew.% Sauerstoff, 0,03 Gew.% Phosphor und 0,03 Gew.% Schwefel sowie Rest unvermeidbare Verunreinigungen aufweisen kann.

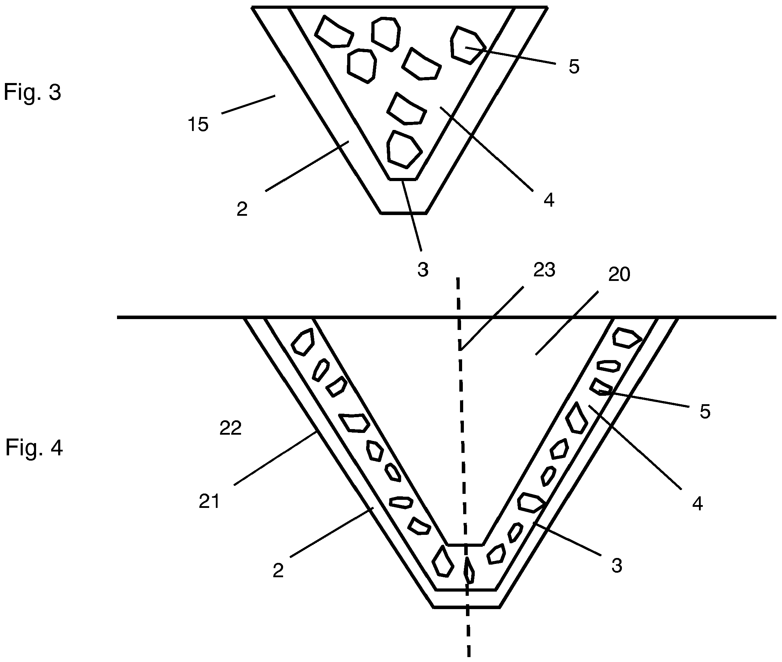

Das Lotband 1, welches nicht nur bandförmig sondern auch plattenförmig oder in anderen geeigneten Formen ausgebildet sein kann, kann das Ni - Lot 4 sowie die Hartstoffpartikel 5 in Pulverform mit einem Bindemittel, wie beispielsweise einem Kunststoff, umfassen, sodass das Lotband 1 bzw. eine entsprechende Lotplatte verformbar ist. Entsprechend kann aus dem flächigen Lotband 1 ein dreidimensional geformtes Formteil gebildet werden, wie es beispielsweise in der Figur 3 dargestellt ist. Dazu kann eine Matrize 10 vorgesehen sein, die eine entsprechende Negativform 11 aufweist, in die das Lotband 1 mithilfe eines Stempels 12 gedrückt wird. Durch Verdichten des Lotbands 1 in der Negativform 11 mittels des Stempels 12 und Entfernen der überschüssigen Teile des Lotbands 1 kann ein entsprechendes kegelförmiges Formteil 15 gebildet werden, wie es beispielsweise in der Figur 3 dargestellt ist. Allerdings kann das Formteil 15 auch in einer anderen geeigneten Form ausgebildet werden. Das Lotband 1 wird hierbei so in die Negativform 11 der Matrize 10 gepresst wird, dass die reine Ni - Lot - Lage 2 an der Matrize anliegt und zuerst in die Negativform 11 durch den Stempel 12 eingedrückt wird. Somit ergibt sich ein kegelförmiges Formteil 15, bei dem im Bereich der Kegelfläche eine äußere, reine Ni - Lot - Lage 2 angeordnet ist, während der Kegelkörper aus einer Gemisch - Lage 3 aus Ni - Lot 4 und Hartstoffpartikeln 5 gebildet ist. Auch die äußere Oberfläche der Basis des kegelförmigen Formteils 15 ist durch die Gemisch - Lage 3 aus Ni - Lot 4 und Hartstoffpartikeln 5 gebildet.

Das entsprechende Formteil 15 kann nunmehr in eine Öffnung oder Vertiefung eines Bauteils 22 eingesetzt werden, wobei die die Öffnung bzw. Vertiefung umgebende Innenwand 21 des Bauteils 22 komplementär zu mindestens einem Teil der Oberfläche des kegelförmigen Formteils 15 ausgebildet ist, wobei die komplementäre Form der Öffnung oder Vertiefung des Bauteils 22 durch eine entsprechende Materialbearbeitung sowohl der Öffnung oder Vertiefung des Bauteils 22 als auch des Formteils erzielt werden kann. Insbesondere ist es vorteilhaft, die Öffnung oder Vertiefung des Bauteils 22 durch Materialabtrag für den Einsatz eines entsprechend geformten Formteils 15 vorzubereiten, da dadurch nicht nur die Formen gegenseitig angepasst werden, sondern auch unerwünschte Oxidschichten oder sonstige Fremdstoffe von der Innenwand 21 der Öffnung bzw. Vertiefung des Bauteils 22 entfernt werden, die eine Anbindung des Formteils 15 an den Grundwerkstoff des Bauteils 22 beeinträchtigen könnten.

Die Figur 4 zeigt eine Vertiefung 20 in einem Bauteil 22 mit einer zentralen Achse 23, in das ein entsprechendes Formteil 15 eingesetzt worden ist. Durch eine geeignete Wärmebehandlung zum Aufschmelzen des Lots in der reinen Ni - Lot - Lage 2 und der Gemisch - Lage 3 sowie Entfernen eines möglicherweise vorhanden Bindemittels im Formteil 15 wird das Formteil als feste Beschichtung an den Grundwerkstoff des Bauteils 22 angebunden. Der Hohlraum der Vertiefung 20 des Bauteils 22 kann durch eine nachfolgende Materialbearbeitung der Gemisch - Lage 3 wieder in der gewünschten Form erzeugt werden, indem beispielsweise eine entsprechende Bohrung in der Gemisch - Lage 3 eingebracht wird. Auch andere Arten der Materialbearbeitung wie Fräsen und dergleichen sind selbstverständlich möglich.

Damit ist in einer Öffnung oder Vertiefung 20 eines Bauteils 22 eine verschleißbeständige Beschichtung mit einem hohen Anteil an Hartstoffpartikeln 5 in einfacher und zuverlässiger Weise aufgebracht worden.

Obwohl die vorliegende Erfindung anhand der Ausführungsbeispiele detailliert beschrieben worden ist, ist es für den Fachmann selbstverständlich, dass die Erfindung nicht darauf beschränkt ist, sondern dass vielmehr Abwandlungen in der Weise möglich sind, dass einzelne Merkmale weggelassen oder andersartige Kombinationen von Merkmalen verwirklicht werden, solange der Schutzbereich der beigefügten Ansprüche nicht verlassen wird.

### BEZUGSZEICHENLISTE

- 1: Lotband
- 2: Lage aus Ni - Lot
- 3: Gemisch - Lage aus Ni - Lot und Hartstoffpartikeln
- 4: Ni - Lot
- 5: Hartstoffpartikel
- 10: Matrize
- 11: Negativform
- 12: Stempel
- 15: kegelförmiges Formteil
- 20: Vertiefung
- 21: Innenwand der Vertiefung vor dem Einsetzen des Formteils
- 22: Bauteil
- 23: zentrale Achse der Vertiefung

## Patentansprüche

1. Verfahren zur Herstellung und/oder Reparatur von durch Verschleiß belasteten Vertiefungen oder Öffnungen an Bauteilen (22) einer Strömungsmaschine, insbesondere von Elementen einer Strömungskanalbegrenzung, welches umfasst:
- Herstellung eines mindestens zweilagigen Formteils (15), dessen eine Lage (2) durch ein Ni - Lot gebildet ist und dessen weitere Lage (3) aus einer Mischung aus einem Ni - Lot (4) und Hartstoffpartikeln (5) aus Hartlegierungen auf Basis von Kobalt oder Nickel gebildet ist und welches zumindest teilweise eine äußere Form aufweist, die der inneren Form der zu reparierenden Vertiefung (20) oder Öffnung komplementär ist,
- Einsetzen des Formteils (15) in die Vertiefung (20) oder Öffnung und
- zumindest teilweise Wärmebehandlung des Bauteils (22) zum Löten der Formteils auf das Bauteil.

2. Verfahren nach Anspruch 1,
**dadurch gekennzeichnet, dass**
die Herstellung des Formteils (15) so erfolgt, dass die Ni - Lot - Lage (2) zumindest teilweise den äußeren Rand des Formteils darstellt, der beim Einsetzen in die Vertiefung oder Öffnung in Anlage an die innere Oberfläche der Vertiefung oder Öffnung gelangt.

3. Verfahren nach einem der vorhergehenden Ansprüche,
**dadurch gekennzeichnet, dass**
die Herstellung des Formteils (15) so erfolgt, dass zunächst ein mindestens zweilagiges Band (1) oder eine zweilagige Platte mit einer ersten Lage (2) aus einem Ni - Lot und einer weiteren Lage (3) aus einer Mischung aus einem Ni - Lot (4) und Hartstoffpartikeln (5) hergestellt wird, wobei in einem nachfolgenden Schritt das Band (1) oder die Platte tiefgezogen oder in eine Matrize (10) gepresst werden, um zumindest teilweise eine äußere Form zu erhalten, die komplementär der inneren Form der Vertiefung (20) oder Öffnung ist.

4. Verfahren nach einem der vorhergehenden Ansprüche,
**dadurch gekennzeichnet, dass**
die Vertiefung (20) oder Öffnung vor Einsetzen des Formteils (15) durch Materialabtrag vorbereitet wird.

5. Verfahren nach einem der vorhergehenden Ansprüche,
**dadurch gekennzeichnet, dass**
die Lage (3) des Formteils (15), welche eine Mischung aus Ni - Lot und Hartstoffpartikeln umfasst, 20 bis 60 Gew.%, vorzugsweise 30 bis 50 Gew.%, höchst vorzugsweise 35 bis 45 Gew.%, insbesondere ca. 40 Gew.% Hartstoffpartikel aufweist.

6. Verfahren nach einem der vorhergehenden Ansprüche,
**dadurch gekennzeichnet, dass**
die Wärmebehandlung unter Vakuumbedingungen erfolgt.

7. Verfahren nach einem der vorhergehenden Ansprüche,
**dadurch gekennzeichnet, dass**
vor der Wärmebehandlung eine Trocknung bei Temperaturen von 50°C bis 80°C, insbesondere 60°C bis 70°C an Luft erfolgt.

8. Verfahren nach einem der vorhergehenden Ansprüche,
**dadurch gekennzeichnet, dass**
die Wärmebehandlung eine Auslagerung bei einer Temperatur von 1150°C bis 1200°C, insbesondere von 1170°C bis 1180°C, für 10 bis 25 min, insbesondere 15 bis 20 min umfasst.

9. Verfahren nach einem der vorhergehenden Ansprüche,
**dadurch gekennzeichnet, dass**
die Wärmebehandlung eine Aufheizung unter Vakuumbedingungen mit einer Aufheizgeschwindigkeit von 5°C/min bis 30°C/min, insbesondere 10°C/min bis 20°C/min und/oder Zwischenauslagerungen bei Temperaturen zwischen 400°C bis 1100°C, insbesondere bei 450°C, 600°C und/oder 1050°C für eine Zeitdauer von 5 bis 40 min, insbesondere 10 bis 30 min umfasst.

10. Verfahren nach einem der vorhergehenden Ansprüche,
**dadurch gekennzeichnet, dass**
die Hartlegierung eine Co - Mo - Cr - Si - Legierung ist, insbesondere eine Legierung, die 16,5 bis 18,5 Gew.% Cr, 27 bis 30 Gew.% Mo, 3 bis 3,8 Gew.% Si, bis zu 3 Gew.% Ni und Fe, jeweils bis zu 0,1 Gew.% S, N, O, C und P sowie Rest Co und unvermeidbare Verunreinigungen aufweist.

11. Verfahren nach einem der vorhergehenden Ansprüche,
**dadurch gekennzeichnet, dass**
das Ni - Lot eine Legierung ist, die Cr und Si aufweist, insbesondere 15 bis 25 Gew.% Cr, 5 bis 15 Gew.% Si und Rest Ni sowie unvermeidbare Verunreinigungen.

12. Bauteil einer Strömungsmaschine, insbesondere einer Strömungskanalbegrenzung, vorzugsweise ein Turbinenzwischengehäuse, vorzugsweise hergestellt mit dem Verfahren nach einem der vorhergehenden Ansprüche, mit mindestens einer Öffnung oder Vertiefung (20), bei welcher die Öffnung oder Vertiefung einen Innenwandbereich (21) umfasst, der die Öffnung oder Vertiefung zumindest teilweise umgibt und der an der Oberfläche eine mindestens zweilagige Lotschicht aufweist, von der eine Lage (2) durch ein Ni - Lot gebildet ist und dessen weitere Lage (3) aus einer Mischung aus einem Ni - Lot (4) und Hartstoffpartikeln (5) aus Hartlegierungen auf Basis von Kobalt oder Nickel gebildet ist, wobei die Lage (2) aus Ni - Lot am Grundwerkstoff des Bauteils (22) angeordnet ist.

## Claims

1. Method for producing and/or repairing recesses or openings, which are subject to wear, in components (22) of a turbomachine, in particular elements of a flow channel boundary, comprising:
- producing a molded part (15) having at least two layers, one layer (2) of which is formed by an Ni solder and another layer (3) of which is formed by a mixture of an Ni solder (4) and hard material particles (5) made of hard alloys based on cobalt or nickel, which part has an outer shape, at least in part, that is complementary to the inner shape of the recess (20) or opening to be repaired,
- inserting the molded part (15) into the recess (20) or opening and
- heat treating the component (22), at least in part, in order to solder the molded part onto the component.

2. Method according to claim 1,
**characterized in that**
the molded part (15) is produced in such a way that the Ni solder layer (2) at least partially forms the outer edge of the molded part that comes into contact with the inner surface of the recess or opening when said part is inserted into the recess or opening.

3. Method according to either of the preceding claims,
**characterized in that**
the molded part (15) is produced in such a way that first a strip (1) having at least two layers or a two-layer plate having a first layer (2) formed by an Ni solder and another layer (3) formed by a mixture of an Ni solder (4) and hard material particles (5) is produced, the strip (1) or the plate being deep-drawn or pressed into a die (10) in a subsequent step in order to obtain, at least in part, an outer shape that is complementary to the inner shape of the recess (20) or opening.

4. Method according to any of the preceding claims,
**characterized in that**
before the molded part (15) is inserted, the recess (20) or opening is prepared by means of material removal.

5. Method according to any of the preceding claims,
**characterized in that**
the layer (3) of the molded part (15) which comprises a mixture of an Ni solder and hard material particles has 20 to 60 wt.%, preferably 30 to 50 wt.%, most preferably 35 to 45 wt.%, in particular approximately 40 wt.% of hard material particles.

6. Method according to any of the preceding claims,
**characterized in that**
the heat treatment is carried out under vacuum conditions.

7. Method according to any of the preceding claims,
**characterized in that**
prior to the heat treatment, drying is carried out at temperatures of from 50°C to 80°C, in particular 60°C to 70°C in air.

8. Method according to any of the preceding claims,
**characterized in that**
the heat treatment comprises aging at a temperature of from 1150°C to 1200°C, in particular from 1170°C to 1180°C, for 10 to 25 minutes, in particular 15 to 20 minutes.

9. Method according to any of the preceding claims,
**characterized in that**
the heat treatment comprises heating under vacuum conditions at a heating rate of from 5°C/min to 30°C/min, in particular 10°C/min to 20°C/min, and/or intermediate aging at temperatures between 400°C and 1100°C, in particular at 450°C, 600°C and/or 1050°C for a period of from 5 to 40 minutes, in particular 10 to 30 minutes.

10. Method according to any of the preceding claims,
**characterized in that**
the hard alloy is a Co-Mo-Cr-Si alloy, in particular an alloy which contains 16.5 to 18.5 wt.% Cr, 27 to 30 wt.% Mo, 3 to 3.8 wt.% Si, up to 3 wt.% Ni and Fe, up to 0.1 wt.% each of S, N, O, C and P and the remainder Co and unavoidable impurities.

11. Method according to any of the preceding claims,
**characterized in that**
the Ni solder is an alloy comprising Cr and Si, in particular 15 to 25 wt.% Cr, 5 to 15 wt.% Si and the remainder Ni and unavoidable impurities.

12. Component of a turbomachine, in particular of a flow channel boundary, preferably an intermediate turbine housing, preferably produced using the method according to any of the preceding claims, having at least one opening or recess (20), the opening or recess comprising an inner wall region (21) which surrounds the opening or recess at least in part and comprises, on the surface, a solder layer having at least two layers, one layer (2) of which is formed by an Ni solder and another layer (3) of which is formed by a mixture of an Ni solder (4) and hard material particles (5) made of hard alloys based on cobalt or nickel, wherein the layer (2) formed by the Ni solder is arranged on the parent material of the component (22).

## Revendications

1. Procédé de fabrication et/ou de réparation d'évidements ou d'ouvertures sollicités par l'usure, au niveau des composants (22) d'une turbomachine, en particulier d'éléments d'une limite de canal d'écoulement, qui comprend :
- la fabrication d'une pièce moulée (15) à au moins deux couches, dont une couche (2) est formée par un brasage à base de Ni et dont l'autre couche (3) est formée par un mélange d'un brasage à base de Ni (4) et de particules de matière dure (5) en alliages durs à base de cobalt ou de nickel et qui présente au moins partiellement une forme extérieure qui est complémentaire à la forme intérieure de l'évidement (20) ou de l'ouverture à réparer,
- l'insertion de la pièce moulée (15) dans l'évidement (20) ou l'ouverture, et
- le traitement thermique au moins partiel du composant (22) pour le brasage de la pièce moulée sur le composant.

2. Procédé selon la revendication 1,
**caractérisé en ce que**
la fabrication de la pièce moulée (15) est effectuée de telle manière que la couche de brasage à base de Ni (2) représente au moins partiellement le bord extérieur de la pièce moulée qui, lorsqu'elle est insérée dans l'évidement ou l'ouverture, entre en contact avec la surface intérieure de l'évidement ou de l'ouverture.

3. Procédé selon l'une des revendications précédentes,
**caractérisé en ce que**
la fabrication de la pièce moulée (15) est effectuée de telle manière que l'on fabrique d'abord une bande (1) à au moins deux couches ou une plaque à deux couches, dont une première couche (2) est formée par un brasage à base de Ni et une autre couche (3) est formée d'un mélange d'un brasage à base de Ni (4) et de particules de matière dure (5), dans lequel, dans une étape suivante, la bande (1) ou la plaque est emboutie ou pressée dans une matrice (10) afin d'obtenir au moins partiellement une forme extérieure qui est complémentaire à la forme intérieure de l'évidement (20) ou de l'ouverture.

4. Procédé selon l'une des revendications précédentes,
**caractérisé en ce que**
l'évidement (20) ou l'ouverture est préparé(e) par enlèvement de matière avant l'insertion de la pièce moulée (15).

5. Procédé selon l'une des revendications précédentes,
**caractérisé en ce que**
la couche (3) de la pièce moulée (15), laquelle est constituée d'un mélange de brasage à base de Ni et de particules de matière dure, présente 20 à 60 % en poids, de préférence 30 à 50 % en poids, mieux encore 35 à 45 % en poids, en particulier environ 40 % en poids, de particules de matière dure.

6. Procédé selon l'une des revendications précédentes,
**caractérisé en ce que**
le traitement thermique est effectué sous vide.

7. Procédé selon l'une des revendications précédentes,
**caractérisé en ce que,**
avant le traitement thermique, un séchage est effectué à l'air libre à des températures comprises entre 50 et 80 °C, en particulier entre 60 et 70 °C.

8. Procédé selon l'une des revendications précédentes,
**caractérisé en ce que**
le traitement thermique comprend une élimination de couche à une température comprise entre 1 150 et 1 200°C, en particulier entre 1 170 et 1 180 °C, pendant 10 à 25 minutes, en particulier pendant 15 à 20 minutes.

9. Procédé selon l'une des revendications précédentes,
**caractérisé en ce que**
le traitement thermique comprend un chauffage sous vide à une vitesse de chauffage comprise entre 5 et 30 °C/min, en particulier entre 10 à 20 °C/min et/ou des éliminations de couches intermédiaires à des températures comprises entre 400 et 1 100 °C, en particulier à 450 °C, 600 °C et/ou à 1 050 °C pendant 5 à 40 minutes, en particulier entre 10 à 30 minutes.

10. Procédé selon l'une des revendications précédentes,
**caractérisé en ce que**
l'alliage dur est un alliage Co-Mo-Cr-Si, en particulier un alliage qui comprend 16,5 à 18,5 % en poids de Cr, 27 à 30 % en poids de Mo, 3 à 3,8 % en poids de Si, jusqu'à 3 % en poids de Ni et de Fe, dans chaque cas jusqu'à 0,1 % en poids de S, N, O, C et P ainsi qu'un résidu de Co et des impuretés inévitables.

11. Procédé selon l'une des revendications précédentes,
**caractérisé en ce que**
le brasage à base de Ni est un alliage qui contient du Cr et du Si, en particulier 15 à 25 % en poids de Cr, 5 à 15 % en poids de Si et un résidu de Ni ainsi que des impuretés inévitables.

12. Composant d'une turbomachine, en particulier d'une limite de canal d'écoulement, de préférence carter intermédiaire de turbine, de préférence fabriqué par le procédé selon l'une des revendications précédentes, comportant au moins une ouverture ou un évidement (20), l'ouverture ou l'évidement comprenant une zone de paroi intérieure (21) qui entoure au moins partiellement l'ouverture ou l'évidement et qui comporte, au niveau de la surface, une couche de brasage à au moins deux couches, dont une couche (2) est formée par un brasage à base de Ni et dont l'autre couche (3) est formée d'un mélange d'un brasage à base de Ni (4) et de particules de matière dure (5) en alliages durs à base de cobalt ou de nickel, la couche (2) de brasage à base de Ni étant disposée au niveau du matériau de base du composant (22).
